Europäisches Patentamt

European Patent Office

Office européen des brevets

(11) Veröffentlichungsnummer: **0 206 073**
**B1**

(12) **EUROPÄISCHE PATENTSCHRIFT**

(45) Veröffentlichungstag der Patentschrift: **02.01.91**

(51) Int. Cl.⁵: **B 01 F 15/04**

(21) Anmeldenummer: **86107837.6**

(22) Anmeldetag: **09.06.86**

(54) **Kolbendosiergerät zur Herstellung eines Kunststoff, insbesondere Schaumstoff bildenden, fliessfähigen Reaktionsgemisches aus mindestens zwei fliessfähigen Reaktionskomponenten.**

(30) Priorität: **21.06.85 DE 3522153**

(43) Veröffentlichungstag der Anmeldung:
**30.12.86 Patentblatt 86/52**

(45) Bekanntmachung des Hinweises auf die
Patenterteilung:
**02.01.91 Patentblatt 91/01**

(84) Benannte Vertragsstaaten:
**DE FR GB IT**

(56) Entgegenhaltungen:
**DE-A-1 778 053      GB-A- 930 377**
**DE-A-1 953 076      US-A-3 356 107**
**DE-A-2 814 688      US-A-3 912 234**
**DE-A-3 021 095      US-A-4 286 732**

Die Akte enthält technische Angaben, die nach dem Eingang der Anmeldung eingereicht wurden und die nicht in dieser Patentschrift enthalten sind.

(73) Patentinhaber: **BAYER AG**
**D-5090 Leverkusen 1 Bayerwerk (DE)**

(72) Erfinder: **Schulte, Klaus, Dipl.-Ing.**
**Kurt-Schumacher-Ring 91b**
**D-5090 Leverkusen 1 (DE)**
Erfinder: **Nadolski, Klaus, Dipl.-Ing.**
**Imbacher Weg 131**
**D-5090 Leverkusen (DE)**
Erfinder: **Ersfeld, Heinrich, Dipl.-Ing.**
**Biesenbach 23**
**D-5090 Leverkusen 3 (DE)**
Erfinder: **Ebeling, Wilfried**
**Am Geusfelde 23**
**D-5060 Odenthal-Glöbusch (DE)**
Erfinder: **Boden, Heinrich**
**Sperberweg 14**
**D-5090 Leverkusen 3 (DE)**
Erfinder: **Schneider, Walter, Dipl.-Ing.**
**Christian-Heesen-Strasse 21**
**D-5063 Overath 6 (DE)**

(56) References cited:

PATENT ABSTRACTS OF JAPAN, Band 7, Nr. 1
(M-183)1146r, 6. Januar 1983; & JP-A-57 160 603
(NIIGATA TEKKOSHO K.K.) 04-10-1982

**Beschreibung**

Die Erfindung betrifft ein Kolbendosiergerät zur Herstellung eines Kunststoff, insbesondere Schaumstoff bildenden, fließfähigen Reaktionsgemisches aus mindestens zwei fließfähigen Reaktionskomponenten, bestehend aus einem hydraulischen Antrieb für je eine antriebsseitig wechselseitig hydraulisch beaufschlagbare Kolben-Zylinder-Einheit je Reaktionskomponente, wobei jede Kolben-Zylinder-Einheit arbeitsseitig einen Arbeitszylinder mit Plungerkolben aufweist und der Arbeitszylinder einerseits mit einem Vorratsbehälter für die entsprechende Reaktionskomponente und andererseits mit einem gemeinsamen Mischkopf verbindbar ist, wobei der hydraulische Antrieb einen Vorratsbehälter für Hydraulikflüssigkeit aufweist, welcher mit einer Hydraulikdosierpumpe verbunden ist, und wobei von der Hydraulikdosierpumpe eine sich zu zwei Leitungsarmen verzweigende Druckleitung mit Umschaltventil abführt, wobei jeder Leitungsarm mit einem Regulierelement ausgestaltet ist und zu einer der beiden Kolben-Dosier-Einheiten führt und in jene bei Beaufschlagung die Dosierung der entsprechenden Komponente zum Mischkopf bewirkende Hydraulikkammer (Mischhubkammer) der Kolben-Zylinder-Einheit mündet, während jeweils von der zweiten Hydraulikkammer (Füllhubkammer) eine Rückleitung über das zugehörige Umschaltventil zum Vorratsbehälter zurückführt.

Bei einem Kolbendosiergerät der eingangs genannten Art (DE—OS 17 78 053) bestehen die Regulierelemente aus Drosseln oder Zahnradpumpen. Die Durchflußmenge an Hydraulikflüssigkeit muß hierbei an jedem Regulierelement gesondert eingestellt werden. Diese gesonderte Einstellung hat sich als sehr zeitaufwendig nd während des Betriebs als störanfällig erwiesen.

Eine starreKopplung vom Pumpen ist aus DE—A—3 021 095 bekannt, und zwar für die direkte Dosierung der Reaktionskomponenten mittels starr verbundener Dosierpumpen. Es hat sich aber gezeigt, daß durch verschiedene Viskositäten, Unterschiede in der Temperierung bei der Lagerhaltung, unterschiedliche Gasgehalte usw. bei dieser Art von Förderung die starre Kopplung sogar nachteilig war, weil sich bei der Förderung, beispielsweise durch die unterschiedliche Kompressibilität der Komponenten, Abweichungen vom gewünschten Dosierverhältnis bemerkbar machten.

Es liegt die Aufgabe vor, Kolbendosiergeräte der eingangs genannten Art so zu verbessern, daß eine schnelle und einfache Einstellung des Dosierverhältnisses der Komponenten durch entsprechende Einstellung der Durchflußmengen der Hydraulikflüssigkeit durch die Regulierelemente möglich ist und daß dieses Dosierverhältnis während des Dosier- und Mischvorganges stets erhalten bleibt, ausgenommen es wird absichtlich verändert.

Gelöst wird die Aufgabe dadurch, daß die in den Zweigleitungen angeordneten Regulierelemente aus starr miteinander gekoppelten Pumpen bestehen.

Durch die Koppelung der Pumpen bleibt das Durchflußmengenverhältnis der beiden Hydraulik-Zweigströme ständig erhalten. Im Falle, daß die Pumpen gleiches Fördervolumen besitzen, ist das Dosierverhältnis 1:1. Es besteht aber auch die Möglichkeit, Pumpen mit unterschiedlichem Fördervolumen einzusetzen, um auf diese Weise ein anderes Dosierverhältnis zu bewirken. Es ist auch möglich, weitere Pumpen vorzusehen, welche bei Bedarf über Leitungen und Absperrventile zuschaltbar sind.

Eine besonders vorteilhafte Ausführungsform ist dadurch gekennzeichnet, daß die Pumpen über ein Schaltgetriebe gekoppelt sind.

Auf diese Weise sind zum Einstellen verschiedener Dosierverhältnisse keine weiteren Pumpen erforderlich, sondern durch Wahl einer Unter- bzw. Übersetzung läßt sich durch unterschiedliche Drehzahl der Pumpen bei gleichbleibendem Fördervolumen ein höherer Durchsatz pro Zeiteinheit bewirken, wodurch das entsprechende Dosierverhältnis erzielbar ist. Es versteht sich, daß die Pumpen trotz der Übersetzung durch das Schaltgetriebe starr gekoppelt bleiben. Als Schaltgetriebe lassen sich sowohl stufenlos schaltbar als auch Stugenschaltgetriebe verwenden. In dem einen Falle lassen sich beliebige Dosierverhältnisse einstellen, im anderen Falle nur solche entsprechend den Schaltstufen.

Vorzugsweise sind die Pumpen umgehende, Absperrventile aufweisenden By-pass-Leitungen vorgesehen.

Die By-pass-Leitungen mit Absperrventilen gestatten es, daß zunächst das gesamte Leitungssystem beider, eventuell unterschiedlich kompressibler Komponenten bis hin zum Kischkopf vorgespannt werden kann.

Nach einer weiteren besonderen Ausführungsform ist mindestens einer Kolben-Zylinder-Einheit ein mit einem Steuergerät verbundener Weggeber zugeordnet.

Dadurch wird erreicht, daß die insgesamt zu dosierende Menge je Mischvorgang durch eine Vorgabe für den Weg des Kolbens einstellbar ist. Zu Beginn des Mischhubes gibt der Weggeber ein Null-Signal an das Steuergerät, welches nach Ablauf der vorgegebenen Wegstrecke oder eines entsprechenden Zeitintervalles den Mischvorgang unterbricht.

Nach einer weiteren Ausführungsform ist mindestens einer Pumpe ein mit einem Steuergerät verbundener Umdrehungszähler zugeordnet.

Diese Ausführungsform ist alternativ zu der vorstehend beschriebenen. Hierbei wird die gesamte zu mischende Komponenten-Menge über eine vorgegebene Anzahl der Umdrehungen eingestellt. Die Signalgebung erfolgt in ähnlicher Weise wie bei der zuvor beschriebenen Lösung.

Vorzugsweise ist den Zweigleitungen eine zwischen den Pumpen und den Kolben-Zylinder-Einheiten über Absperrventile abzweigende Rückleitung zugeordnet.

Diese Ausführungsform hat den Vorteil, daß man zunächst über die Pumpen die Hydraulikflüssigkeit im Niederdruck-Kreislauf fördern kann, so daß während dieser Zeit das Dosierverhältnis der Reaktionskomponenten durch Wahl der Dosiermenge pro Zeiteinheit der Pumpen eingestellt werden kann, währenddessen die Kolben-Zylinder-Einheit gar nicht beaufschlagt zu werden braucht.

Eine weitere Ausführungsform ist dadurch gekennzeichnet, daß von der Druckleitung zwischen Hydrauliksdosierpumpe und Umschaltventil über ein Druckbegrenzungsventil eine Rückleitung abzweigt.

Durch diese Maßnahme wird erreicht, daß man das gesamte Leitungssystem auf einen vorgegebenen hohen Druck vorspannen kann, auf den das Druckbegrenzungsventil eingestellt ist. Bei Erreichen dieses Druckes öffnet sich das Druckbegrenzungsventil und die Hydraulikflüssigkeit kann zunächst im Kreislauf gefahren werden. Werden dann die Einspritzöffnungen im Mischkopf geöffnet, fällt der Druck schlagartig ab, das Druckbegrenzungsventil schließt und der Dosier- und Mischvorgang setzt ein.

In einer Zeichnung ist das neue Kolbendosiergerät rein schematisch dargestellt und nachstehend näher erläutert:

Das Kolbendosiergerät besteht im wesentlichen auf vier Baugruppen, nämlich einem hydraulischen Antrieb 1, zwei Kolben-Zylinder-Einheiten 2, 3, einen Mischkopf 4 mit Vorratsbehältern 5, 6 für die Reaktionskomponenten und einem allen gemeinsamen Steuergerät 7. Der hydraulische Antrieb 1 umfaßt einen Vorratsbehälter 8 für hochviskose Hydraulikflüssigkeit, von welchem eine Leitung 9 über eine Hydraulikdosierpumpe 10 abführt und sich in Leitungsarme 11, 12 verzweigt, in denen hintereinander jeweils ein Umschaltventil 13, 14 und eine Pumpe 15, 16 angeordnet sind. Den Hydraulikmotoren 15, 16 sind sie umgehende, Absperrventile 17, 18 enthaltende By-pass-Leitungen 19, 20 zugeordnet. Die Pumpen 15, 16 sind untereinander über ein Schaltgetriebe 21 verbunden. Dessen Wellen 22, 23 sind Umdrehungszähler 24, 25 zugeordnet. Anstelle des Schaltgetriebes 21 können die beidem Pumpen 15, 16 in einfachster Weise über eine starre Kupplung gekoppelt sein; dann ist nur ein Umdrehungszähler vorzusehen. Die Leitungsarme 11, 12 münden in die Mischhubkammern 26, 27 der Hydraulikzylinder 28, 29 der Kolben-Zylinder-Einheiten 2, 3. Zwischen den Pumpen 15, 16 und den Mischhubkammern 26, 27 zweigen von den Leitungsarmen 11, 12 zwei Absperrventile 30, 31 enthaltende, sich zu einem Leitungsstück 32 vereinigende Zweigleitungen 33, 34 ab. Die Hydraulikzylinder 28, 29 sind durch Hydraulikkolben 35, 36 in die besagten Mischhubkammern 26, 27 und in Füllhubkammern 37, 38 unterteilt. Von den Füllhubkammern 37, 38 führen Rückleitungen 39, 40, wobei das Leitungsstück 32 in die Rückleitung 40 mündet, über die Umschaltventile 13, 14 zurück in den Vorratsbehälter 8. Schließlich zweigt noch stromaufwärts der Hydraulikdosierpumpe 10 eine Leitung 41 über ein Druckbegrenzungsventil 42 ab und mündet in die Rückleitung 40. Die Kolben-Zylinder-Einheiten 2, 3 umfassen des weiteren je einen Arbeitszylinder 43, 44, in welche über Kolbenstrangen 45, 46 mit den Hydraulikkolben 35, 36, fest verbundene Plungerkolben 47, 48 eintauchen. Den Kolbenstangen 45, 46 sind einstellbare Weggeber 49, 50 zugeordnet. Von Vorratsbehältern 5, 6 für Polyol und Isocyanate führen mit Rückschlagventilen 51, 52 ausgestattete Zuleitungen 53, 54 in die Arbeitszylinder 43, 44. Ebenfalls mit Rückschlagventilen 57, 58 ausgestattete Leitungen 59, 60 führen von den Arbeitszylindern 43, 44 zum Mischkopf 4 und münden über Einspritzöffnungen 55, 56. Von den Leitungen 59, 60 führen Rückleitungen 61, 62 über Absperrventile 63, 64 zurück zu den Vorratsbehältern 5, 6. Der Mischkopf 4 ist mit einem Ausstoßkolben 65 mit hydraulischem Antrieb 66 ausgestattet, welchem ein Umschaltventil 67 zugeordnet ist. Hydraulikpumpe und Reservoir sind nicht dargestellt. Mit dem Steuergerät 7 sind alle funktionsausübenden bzw. steuerbaren Elemente verbunden, und zwar: Der Antriebsmotor 68 der Hydraklikdosierpumpe 10 über eine Impulsleitung 69, die Umschaltventile 13, 14 über eine Impulsleitung 70, die Absperrventile 17, 18 über eine Impulsleitung 71, die Umdrehungszähler 24, 25 über eine Impulsleitung 72, die Absperrventile 30, 31 über eine Impulsleitung 73, die Weggeber 49, 50 über eine Impulsleitung 74, die Absperrventile 63, 64 über eine Impulsleitung 75 und das Umschaltventil 67 über eine Impulsleitung 76.

Die Betriebsweise des neuen Kolbendosiergerätes ist folgende: Vom Steuergerät 7 wird die Hydraulikdosierpumpe 10 über die Impulsleitung 69 und den Antriebsmotor 68 betätigt. Die Absperrventile 17, 18 sind dabei geschlossen und die Absperrventile 30, 31 geöffnet. Die Hydraulikflüssigkeit strömt nun durch die Pumpen 15, 16 unter einem Niederdruck von etwa 8 bar im Kreislauf in den Vorratsbehälter 8 zurück, Während dieser Kreislaufphase wird das Dosierverhältnis der beiden Reaktionskomponenten durch Wahl einer entsprechenden Schaltstufe des Schaltgetriebes 21 vorgewählt. Die Absperrventile 30, 31 werden anschließend geschlossen und die Absperrventile 17, 18 geöffnet. Die Hydraulikflüssigkeit spannt nun das gesamte Leitungssystem vor, und zwar einschließlich der Leitungen 59, 60. Hierzu ist eine gewisse Druckaufbauzeit erforderlich. Bei Erreichen des mit dem Druckbegrenzungsventil 42 vorgewählten Druckes von 200 bar öffnet dieses und die Hydraulikflüssigkeit strömt unter diesen Druck, welcher etwas höher liegt als der sich später einstellende Arbeitsdruck, im Kreislauf über die Leitung 41 in den Vorratsbehälter 8 zurück. Die Absperrventile 17, 18 werden nun geschlossen. Damit ist das Kolbendosiergerät für einen Mischvorgang vorbereitet. Vom Steuergerät 7 wird nun über die Impulsleitung 76 das Umschaltventil 67 angeregt, so daß der Antrieb 66 den Ausstoß- und Steuerkolben 65 zurückfährt, wodurch Mischkammer und die Einspritzöffnungen 55, 56 freigegeben werden. Der vorgespannte Druck fällt plötzlich ab; das Druckbegrenzungsventil 42 schließt deshalb, und die Hydraulikflüssigkeit strömt über die Pumpen 15, 16 in die Mischhubkammern 26, 27. Im gleichen Maße, wie sich die Mischhubkammern 26, 27 füllen, pressen die Plungerkolben 47, 48 die Reaktionskomponenten durch die Leitungen 59, 60 in den Mischkopf 4, wo sie vermischt werden. Während der Injektionsphase stellt sich im Leitungssystem ein Druck von etwa 150 bar ein. Die Dosier- und Mischzeit läßt sich auf zweierlei Weise steuern bzw. einstellen: Einmal ist es möglich, sie auf eine bestimmte Anzahl von Umdrehungen, welche der erforderlichen zu dosierenden Komponentenmenge entspricht, einzustellen; nach Erreichen der vorgewählten Anzahl wird über die Impulsleitung 72 an das Steuergerät 7 ein Signal gegeben, und das Steuergerät 7 gibt über die Impulsleitung 76 einen Befehl an das Umschaltventil 67, wodurch der Steuer- und Ausstoßkolben 65 in die Mischkammer fährt und den Dosier- und Mischvorgang unterbricht. Zum anderen ist es alternativ möglich, die zu dosierende Komponentenmenge über Wegmessung bzw. Wegvorgabe zu bestimmen. Die Weggebar 49, 50 sind so ausgestaltet, daß sie mit Beginn des Hubes einen Startimpuls über die Impulsleitung 74 an das Steuergerät 7 geben. Von diesem wird dann wiederum über die Impulsleitung 76 das Umschaltventil 67 und damit der Steuer- und Ausstoßkolben 65 betätigt. Nach Erreichen eines vorgegebenen Zeitintervalles oder eines vorgegebenen Hubweges, welcher der erforderlichen Dosiermenge entspricht, wird über die Impulsleitung 76 durch Umschalten des Umschaltventils 67, ebenso wie oben beschrieben, der Mischvorgang beendet. Unmittelbar nach Beendigung des Dosier- und Mischvorganges baut sich der Druck im gesamten Leitungssystem wieder auf, bis das Druckbegrenzungsventil 42 öffnet und die Hydraulikflüssigkeit über die Leitung 41 in den Vorratsbehälter 8 zurückfließt. Nun müssen die Arbeitszylinder 43, 44 wieder nachgefüllt werden. Dazu werden die Umschaltventile 13, 14 betätigt, so daß nunmehr die Hydraulikflüssigkeit über die Leitungen 39, 40 in die Füllhubkammern 37, 38 strömt. Die Plungerkolben 47, 48 fahren zurück und saugen die Komponenten aus den Vorratsbehäetern 5, 6 an. Nachdem das Kolbendosiergerät nach beendetem Füllvorgang wieder in die Ausgangsposition gebracht worden ist, kann der nächste Arbeitstakt beginnen. Während Pausenzeiten werden zur Temperierung und Homogenisierung der Reaktionskomponenten diese im Kreislauf gefahren, indem die mit Drosseln versehenen Absperrventile 63, 64 geöffnet werden. Es versteht sich, daß dabei das Kolbendosiergerät wechselweise fortlaufend Ausstoßhübe und Füllhübe ausführen muß.

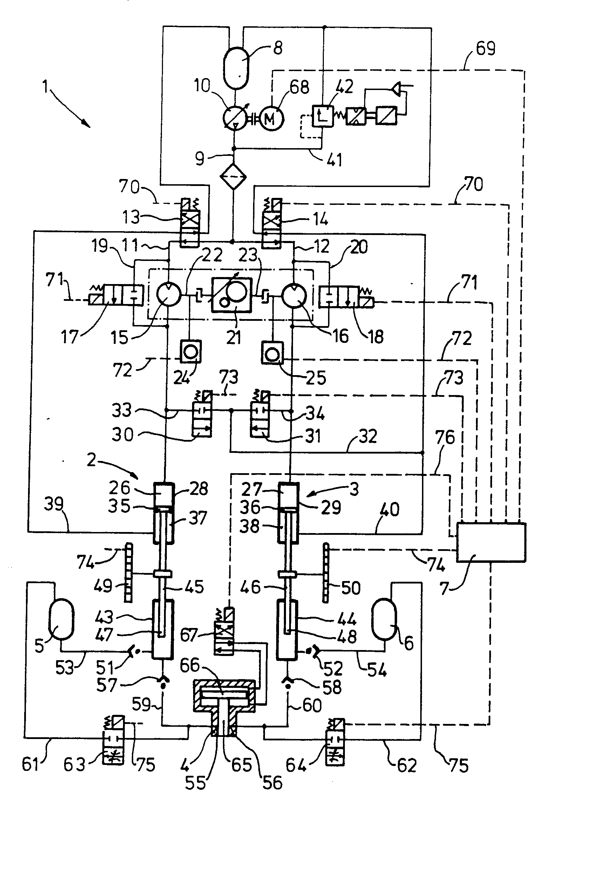

**Patentansprüche**

1. Kolbendosiergerät zur Herstellung eines Kunststoff, insbesondere Schaumstoff bildenden, fließfähigen Reaktionsgemisches aus mindestens zwei fließfähigen Reaktionskomponenten, bestehend aus einem hydraulischen Antrieb (1) für je eine antriebsseitig wechselseitig hydraulisch beaufschlagbare Kolben-Zylinder-Einheit (2, 3) je Reaktionskomponente, wobei jede Kolben-Zylinder-Einheit (2, 3) arbeitsseitig einen Arbeitszylinder (43, 44) mit Plungerkolben (47, 48) aufweist und der Arbeitszylinder (43, 44) einerseits mit einem Vorratsbehälter (5, 6) für die entsprechende Reaktionskomponente und andererseits mit einem gemeinsamen Mischkopf (4) verbindbar ist; wobei der hydraulische Antrieb (1) einen Vorratsbehälter (8) für Hydraulikflüssigkeit aufweist, welcher mit einer Hydraulikdosierpumpe (10) verbunden ist und wobei von der Hydraulikdosierpumpe (10) eine sich zu zwei Leitungsarmen (11, 12) verzweigende Druckleitung (9) mit Umschaltventil (13, 14) kbführt, wobei jeder Leitungsarm (11, 12) mit einem Regulierelement (15, 16) ausgestattet ist und zu einer der beiden Kolben-Dosier-Einheiten (2, 3) führt und in jene bei Beaufschlagung die Dosierung der entsprechenden Reaktionskomponente zum Mischkopf (4) bewirkende Hydraulikkammer (26, 28) (Mischhubkammer) der Kolben-Zylinder-Einheit (2, 3) mündet, während jeweils von der zweiten Hydraulikkammer (37, 38) (Füllhubkammer) eine Rückleitung (39, 40) über das zugehörige Umschaltventil (13, 14) zum Vorratsbehälter (8) zurückführt, dadurch gekennzeichnet, daß die in den Zweigleitungen (11, 12) angeordneten Regulierelemente (15, 16) aus starr miteinander gekoppelten Pumpen (15, 16) bestehen.

2. Kolbendosiergerät nach Anspruch 1, dadurch gekennzeichnet, daß die Pumpen (15, 16) über ein Schaltgetriebe (21) gekoppelt sind.

3. Kolbendosiergerät nach Anspruch 1 oder 2, gekennzeichnet durch die Pumpen (15, 16) umgehende, Absperrventile (17, 18) aufweisende Bypass-Leitungen (19, 20).

4. Kolbendosiergerät nach einem der Ansprüche 1 bis 3, dadurch gekennzeichnet, daß mindestens einer Kolben-Zylinder-Einheit (2, 3) ein mit einem Steuergerät (7) verbundener Weggeber (49, 50) zugeordnet ist.

5. Kolbendosiergerät nach einem der Ansprüche 1 bis 4, dadurch gekennzeichnet, daß mindestens einer Pumpe (15, 16) ein mit einem Steuergerät (7) verbundener Umdrehungszähler (24, 25) zugeordnet ist.

6. Kolbendosiergerät nach einem der Ansprüche 1 bis 5, dadurch gekennzeichnet, daß den Zweigleitungen (11, 12) eine zwischen den Pumpen (15, 16) und den Kolben-Zylinder-Einheiten (2, 3) über Absperrventile (30, 31) abzweigende Rückleitung (32, 33, 34) zugeordnet ist.

7. Kolbendosiergerät nach einem der Ansprüche 1 bis 6, dadurch gekennzeichnet, daß von der Druckleitung (9) zwischen Hydraulikdosierpumpe (10) und Umschaltventil (13, 14) über ein Druckbegrenzungsventil (42) eine Rückleitung (41) abzweigt.

**Revendications**

1. Doseur à piston pour la fabrication d'une

matière plastique, en particulier d'un mélange réactif fluide, formant une mousse, constitué d'au moins deux composants réactionnels fluides, comportant un mécanisme d'entraînement hydraulique (1) pour une unité à cylindre et piston (2, 3) alimentée hydrauliquement et alternativement, côté entraînement, pour chaque composant réactionnel, chaque unité à cylindre et piston (2, 3) comportant, côté travail, un cylindre de travail (43, 44) avec piston plongeur (47, 48) et le cylindre de travail (43, 44) pouvant être relié d'un côté à un réservoir (5, 6) pour le composant réactionnel correspondant et d'un autre côté à une tête de mélange (4) commune; le mécanisme d'entraînement hydraulique (1) comportant un réservoir (8) pour le liquide hydraulique, relié à une pompe hydraulique doseuse (10), et une conduite de pression (9) avec vanne de commutation (13, 14) se ramifiant en deux bras de conduite (11, 12), à partir de la pompe hydraulique doseuse (10), chaque bras de conduite (11, 12) étant équipé d'un élément de régulation (15, 16) et menant à l'une des deux unités de dosage à piston (2, 3) et débouchant dans la chambre hydraulique (26, 28) (chambre de mélange) de l'unité à cylindre et piston (2, 3) qui entraîne, lors de l'alimentation, le dosage du composant réactionnel correspondant vers la tête de mélange (4), tandis que de la seconde chambre hydraulique (37, 38) (chambre de remplissage), une conduite de retour (39, 40) retourne au réservoir (8) par la vanne de commutation (13, 14) correspondante, caractérisé en ce que les éléments de régulation (15, 16) placés dans les bras de ramification (11, 12) sont constitués de pompes (15, 16) couplées de manière rigide entre elles.

2. Doseur à piston selon la revendication 1, caracatérisé en ce que les pompes (15, 16) sont couplées par un engrenage de manoeuvre (21).

3. Doseur à piston selon la revendication 1 ou 2, caractérisé par des conduites de dérivation (19, 20) contournant les pompes (15, 16) et comportant des vannes d'arrêt (17, 18).

4. Doseur à piston selon l'une des revendications 1 à 3, caractérisé en ce qu'un capteur de distance (49, 50) relié à un appareil de commande (7) est associé à au moins une unité à cylindre et piston (2, 3).

5. Doseur à piston selon l'une des revendications 1 à 4, caractérisé en ce qu'un compte-tours (24, 25) relié à un appareil de commande (7) est associé à au moins une pompe (15, 16).

6. Doseur à piston selon l'une des revendications 1 à 5, caractérisé en ce qu'une conduite de retour (32, 33, 34), partant d'entre les pompes (15, 16) et les unités à cylindre et piston (2, 3), par l'intermédiaire de vannes d'arrêt (30, 31), est associée aux bras de ramification (11, 12).

7. Doseur à piston selon l'une des revendications 1 à 6, caractérisé en ce qu'une conduite de retour (41) part de la conduite de pression (9), entre la pompe hydraulique doseuse (10) et la vanne de commutation (13, 14), par l'intermédiaire d'une vanne (42) de limitation de pression.

## Claims

1. A piston metering unit for the production of a free-flowing reaction mixture of at least two components which react to form a plastic, more particularly a foam, consisting of a drive (1) for piston-and-cylinder units (2, 3)—designed for alternate hydraulic operation on the drive side—for each reaction component, each piston-and-cylinder unit (2, 3) comprising a working cylinder (43, 44) with a plunger piston (47, 48) on the working side and the working cylinder (43, 44) being designed for connection at one end to a storage tank (5, 6) for the corresponding reaction component and, at its other end, to a common mixing head; the hydraulic drive (1) comprising a reservoir (8) for hydraulic fluid which is connected to a hydraulic metering pump (10) and a pressure line (9)—branching into two arms (11, 12)—with a change-over valve (13, 14) leading off from the hydraulic metering pump (10), each arm (11, 12) being fitted with a regulating element (15, 16) and leading to one of the two piston metering units (2, 3) and opening into that hydraulic chamber (26, 28) (mixing stroke chamber) of the piston-and-cylinder unit (2, 3) which, on activation, meters the corresponding reaction component to the mixing head (4), while a return pipe (39, 40) leads back from the second hydraulic chamber (37, 38) (filling stroke chamber) via the associated change-over valve (13, 14) to the reservoir (8), characterized in that the regulating elements (15, 16) arranged in the branch pipes (11, 12) consist of fixedly interconnected pumps (15, 16).

2. A piston metering unit as claimed in claim 1, characterized in that the pumps (15, 16) are coupled by a control mechanism (21).

3. A piston metering unit as claimed in claim 1 or 2, characterized by bypass pipes (19, 20) with shut-off valves (17, 18) which bypass the pumps (15, 16).

4. A piston metering unit as claimed in any of claims 1 to 3, characterized in that a stroke sensor connected to a control unit (7) is associated with at least one piston-and-cylinder unit (2, 3).

5. A piston metering unit as claimed in any of claims 1 to 4, characterized in that a revolution counter (24, 25) connected to a control unit (7) is associated with at least one pump (15, 16).

6. A piston metering unit as claimed in any of claims 1 to 5, characterized in that a return pipe (32, 33, 34) which branches off between the pumps (15, 16) and the piston-and-cylinder units (2, 3) via shut-off valves (30, 31) is associated with the branch pipes (11, 12).

7. A piston metering unit as claimed in any of claims 1 to 6, characterized in that a return pipe (41) branches off from the pressure line (9) between the hydraulic metering pump (10) and the change-over valve (13, 14) via a pressure limiting valve (42).